# EUROPÄISCHE PATENTSCHRIFT

(11) **EP 2 245 709 B1**
(45) Veröffentlichungstag und Bekanntmachung des Hinweises auf die Patenterteilung: **06.06.2012**
(21) Anmeldenummer: 09714359.8
(22) Anmeldetag: 18.02.2009
(51) Int. Cl.: H01S 3/02

(54) **LASERKRISTALLEINRICHTUNG**
LASER CRYSTAL DEVICE
DISPOSITIF À CRISTAL LASER

(30) Priorität: 18.02.2008 AT 2602008
(43) Veröffentlichungstag der Anmeldung: 03.11.2010
(73) Patentinhaber: Femtolasers Produktions GmbH, 2100 Korneuburg (AT)
(72) Erfinder: ASSION, Andreas, A-1140 Wien (AT); STINGL, Andreas, A-1050 Wien (AT); TOMASCH, Alfred, A-1040 Wien (AT); WARMUTH, Christian, A-3412 Kierling (AT)
(74) Vertreter: Sonn & Partner Patentanwälte
(86) Internationale Anmeldenummer: PCT/AT2009/000060
(87) Internationale Veröffentlichungsnummer: WO 2009/105796

(56) Entgegenhaltungen:
- EP-A- 1 034 584
- EP-A- 1 833 127
- JP-A- 2005 172 688
- US-A- 3 655 268
- US-A- 6 002 697
- US-B2- 6 741 620
- WARREN GRICE: "laser damage to optial windows in the laser wire apparatus" HTTP://WWW.SNS.GOV/DIAGNOSTICS/DOCUMENTS/F DRREVIEW/LASER/LASERDAMAGE.PDF, [Online] 14. März 2002 (2002-03-14), XP002559508

## Beschreibung

Die Erfindung betrifft eine Laserkristalleinrichtung für Kurzpulslaser gemäß dem Oberbegriff von Anspruch 1. Eine derartige Laserkristalleinrichtung ist aus der EP 1 034 584 B bekannt.

Weiters bezieht sich die Erfindung auf einen modenverkoppelten Laseroszillator mit einer solchen Laserkristalleinrichtung.

Moderne Laseroszillatoren für die Erzeugung von kurzen Laserpulsen haben aufgrund der kurzen Pulsdauer ungeachtet der geringen Durchschnittsleistung eine hohe Spitzenleistung. Dadurch kann bei modenverkoppelten Femtosekunden-Laseroszillatoren, z.B. mit einer Pulsdauer unter 100 fs, durch die hohe Intensität der Laserstrahlung, d.h. durch die hohe Spitzenleistung, eine Degradation der Kristalloberfläche die Folge sein, selbst wenn die Fluenz an der Kristalloberfläche allgemein weit unterhalb der Zerstörschwelle des Kristalls liegt. Eine solche Schädigung der Kristalloberfläche führt zu Störungen im Laserbetrieb und zu einer höheren Absorption des Kristalls sowie in der Folge zu einer Zerstörung des Laserkristalls.

Die Beeinträchtigung der Kristalloberfläche hängt von der den Kristall umgebenden Atmosphäre und von der Intensität der Laserstrahlung ab. Im Fall einer reinen Atmosphäre bzw. einer niedrigen Laserintensität kommt es zu keiner Degradierung des Laserkristalls. Andererseits hat es sich gezeigt, dass es selbst in Reinräumen zu Degradierungsprozessen kommen kann, etwa wenn in der Nähe der Lasereinrichtung elektronische Geräte ausgasen.

Aus der US 6 002 697 A ist ein Dioden-gepumpter Laser mit Frequenzvervielfacher-Stufen bekannt, wobei in letzteren nichtlineare Laserkristalle vorgesehen sind, die in abgedichteten Behältern angeordnet sind, um ein Eindringen von Feuchtigkeit oder Verunreinigungen von außen zu verhindern. Im Besonderen ist es hier ein Anliegen, Beeinträchtigungen des Laserkristalls durch Absorbieren und Freigeben von Feuchtigkeit beim Abkühlen und Erhitzen zu verhindern, und zu diesem Zweck ist überdies auch vorgesehen, im Inneren des Gehäuses oder Behälters eine Inertgas-Atmosphäre oder trockene Luft vorzusehen oder das Behälterinnere zu evakuieren. Die unter dem Brewsterwinkel zur Laserstrahlung angeordneten Fenster für den Eintritt bzw. Austritt der Laserstrahlung sind an gegenüberliegenden Seiten des allgemein quaderförmigen Behälters gegeneinander verdreht angeordnet. Die Konstruktion dieser Laserkristalleinrichtung ist dadurch verhältnismäßig aufwendig und voluminös. Auch hat sich das im Weiteren beschriebene laufende Kontrollieren und Spülen der Inertgas-Atmosphäre im Behälterinneren, abgesehen von dem damit verbundenen Aufwand beim Betrieb der zugehörigen Laservorrichtung, als nachteilig für den Laserbetrieb erwiesen.

In der US 3 655 268 A ist ein rohrförmiger Laserstrahl-Abschwächer mit drehbarem Innenrohr beschrieben, welches zur Änderung der Abschwächung verdreht werden kann. Im Inneren des Rohrs sind zwei gegeneinander geneigte Fenster angeordnet. Der Laserstrahl geht axial durch die Rohranordnung hindurch.

In der US 6 741 620 B ist ferner eine an sich herkömmliche UV-Laseranordnung geoffenbart, wobei eine Füllung des den Laserkristall enthaltenden Behälters mit einem trockenen, inerten Gas im Hinblick auf die stark hydroskopische Eigenschaften des Kristalls erwähnt ist.

Die JP 2005-172 688 A beschreibt eine Vorrichtung mit einer, ein absorbierendes Material enthaltenden Standardzelle und Reflektoren für eine Totalreflexion des jeweiligen Lichstrahls. Die Ein- bzw. Austrittsflächen der Standardzelle sind entsprechend dem Brewster-Winkel angeordnet.

In der EP 1 034 584 B ist eine Laserkristalleinrichtung für einen Laserverstärker wie eingangs erwähnt geoffenbart, bei der der Laserkristall in einem dicht gekapselten Behälter, mit Laserstrahl-Einkoppelfenstern an eigenen Rohrstutzen, untergebracht ist. Das Innere des Behälters wird hier evakuiert und/oder mittels einer Trocknungssubstanz trocken gehalten. Hintergrund dieser Maßnahmen ist, dass der Laserkristall mithilfe von Peltierelementen stark gekühlt werden soll, um einen hohen Wirkungsgrad des Laserverstärkers, dem der Laserkristall zugeordnet ist, zu erzielen, wobei durch die Evakuierung oder Trocknung des Behälterinneren das Einbrennen von Kondenswasser bzw. Eis an der Kristalloberfläche verhindert werden soll.

Es kann aber auch ohne eine derartige starke Kühlung in Laseroszillatoren zu einer Degradierung der Kristalloberfläche kommen, wenn die Umgebung des Laserkristalls nicht als "reine" Atmosphäre vorliegt.

Weiters hat sich gezeigt, dass auch die an den Behältern vorgesehenen Fenster, über die das Laserlicht zum Kristall gelangt bzw. ausgekoppelt wird, einer Degradierung unterliegen können, wodurch der Betrieb der Lasereinrichtung, zu der der Laserkristall gehört, ebenfalls beeinträchtigt werden kann. Dies ist gerade bei einem Laserverstärker, wie er in der EP 1 034 584 B betroffen ist, und bei dem im Vergleich zu einer Kurzpuls-Laservorrichtung besonders hohe Spitzenleistungen auftreten, von Bedeutung; demgemäß werden die unter dem Brewsterwinkel angeordneten Laserstrahl-Fenster bei dieser bekannten Laserkristalleinrichtung für einen Laserverstärker wie erwähnt an eigenen Rohrstutzen außen angebracht, um so einen möglichst großen Abstand zum Laserkristall, in der Größenordnung von 8 bis 10 cm, zu erzielen. Dadurch wird im Bereich der Brewsterfenster ein relativ großer Strahlquerschnitt erhalten, um so an dieser Stelle eine vergleichsweise geringe Spitzenintensität zu erhalten. An sich wird durch die Anordnung der Fenster unter dem Brewsterwinkel (der bekanntlich unter anderem von der Wellenlänge bzw. Frequenz der Strahlung abhängt) einer Reflexion am Fenster entgegengewirkt.

Es ist nun Aufgabe der Erfindung, eine Laserkristalleinrichtung der eingangs angeführten Art so auszubilden, dass eine einfache, kompakte Konstruktion ermöglicht wird, wobei auch etwaige Beeinträchtigungen durch Degradierungseffekte an den Fenstern des Behälters vermieden bzw. minimiert werden.

Zur Lösung dieser Aufgabe sieht die Erfindung eine Laserkristalleinrichtung wie in Anspruch 1 angegeben vor; vorteilhafte Ausführungsformen und Weiterbildungen sind in den abhängigen Ansprüchen definiert.

Bei der vorliegenden Laserkristalleinrichtung ergibt sich eine außerordentlich einfache, kompakte, platzsparende Ausbildung durch die angeführte Anordnung der Fenster relativ zueinander in winkelig zueinander angeordneten, vorzugsweise aneinander anschließenden Seitenwänden, wobei dann diese Seitenwände unter dem doppelten Brewsterwinkel zueinander angeordnet sind. Platzsparend wirkt sich auch aus, wenn am Übergang von einer Seitenwand zur anderen eine Abflachung oder Abrundung (eine Übergangsfase) vorgesehen ist.

Weiters werden die für die Laserstrahlung vorgesehenen Fenster (die z.B. aus Quarzglas bestehen) so relativ zum Laserkristall platziert, dass die Spitzenintensität der Laserstrahlung an den Fenstern deutlich geringer ist als an der Kristalloberfläche, wodurch Degenerierungsprozesse an den Fenstern vermieden werden. Diese Verringerung oder Minimierung der Intensität der Laserstrahlung an den Fenstern wird durch einen entsprechenden Abstand der Fenster vom Laserkristall erzielt, wobei der Umstand genützt wird, dass der Laserstrahl auf den Laserkristall fokussiert ist, d.h. eine konvergente Form hat und daher in Abstand vom Laserkristall einen größeren Strahlquerschnitt aufweist als direkt an der Kristalloberfläche. Zufolge dieser Laserstrahlgeometrie, in Abstimmung mit der allgemeinen Energie bzw. Intensität des Laserstrahls, wird daher erreicht, dass der Laserstrahl am Ort der Fenster eine im Vergleich zur Intensität der Strahlung an der Stelle des Laserkristalls wesentlich geringere Intensität aufweist, so dass eine Beeinträchtigung der Oberfläche des Quarzglases der Fenster vermieden wird. Der Abstand der Fenster vom Laserkristall richtet sich dabei in erster Linie nach dem Fokussierungsgrad der Laserstrahlung, d.h. je größer der Konvergenzwinkel ist, desto kürzer kann der Abstand sein, wogegen die Fenster relativ weit vom Laserkristall anzuordnen sind, wenn die Konvergenz des Laserstrahls eher gering ist. Mit berücksichtigt werden muss natürlich bei der Wahl des Abstandes auch die grundsätzliche Leistung der Laserstrahlung, genauer die jeweilige Spitzenleistung im Hinblick auf die kurzen Pulsdauern. Als Beispiel kann hier angegeben werden, dass im Fall einer Laserstrahlung mit einer Wellenlänge von 800 mm und einer Pulsdauer von 20 fs eine Spitzenleistung von 1,5 MW gegeben ist, wobei im Fall eines Konvergenzwinkels (halber Öffnungswinkel) des Laserstrahls im Bereich des Laserkristalls und seines Behälters von ca. 2, 3° ein Abstand zwischen dem Laserkristall und den Fenstern von ca. 3 mm bzw. 8 mm ausreichend ist.

Bei Fokussierung der Laserstrahlung in den Laserkristall wird durch die angegebene Wahl des Abstands der Fenster vom Laserkristall eine Vergrößerung des Strahldurchmessers am Ort der Fenster erreicht. Diese Vergrößerung ist noch stärker, wenn die Fenster unter dem Brewsterwinkel schräg zur Strahlachse angeordnet werden. Durch diese Schrägstellung wird, wie unmittelbar einzusehen sein wird, zusätzlich eine Vergrößerung der Fläche, gemäß der der Laserstrahl durch die Fenster hindurchtritt, erzielt, so dass auch dadurch die Spitzenintensität der Laserstrahlung am Fenster verringert wird.

Wie bereits vorstehend erwähnt ist es bereits bekannt, das Innere des Behälters, in dem der Laserkristall angeordnet ist, zu evakuieren, mit einem Inertgas zu spülen oder aber mithilfe eines Trocknungsmittels trocken zu halten. Diese Maßnahmen zielen auf eine Minimierung der Feuchtigkeit im Behälterinneren ab. Wie sich jedoch gezeigt hat, könnte die Kristalloberfläche ganz allgemein durch verschiedenste Stoffe, Gase oder Partikel, in der Umgebung beeinträchtigt werden, wenn sich der Laserkristall aufgrund dieser Atmosphäre zu beschlagen beginnt. Bei der vorliegenden Laserkristalleinrichtung enthält daher das Behälterinnere eine technisch reine Atmosphäre, wobei dann keine Degradierung des Laserkristalls, auch bei relativ hohen Laserintensitäten, stattfindet. Unter einer technisch reinen Atmosphäre ist dabei zu verstehen, dass keine Aerosole aus technischen oder natürlichen Quellen vorhanden sind. Es wird hier besonders bevorzugt, wenn der Behälter mit Edelgas oder mit reiner Luft gefüllt ist, bzw. wenn er ein Gas mit einem hohen Ionisationspotential, wie ein Edelgas enthält. Im Fall eines derartigen Gases mit hohem Ionisationspotential ergibt sich, dass die Intensität des Laserstrahls nicht zur Ionisation der Moleküle ausreicht.

Wie erwähnt kommt es aufgrund der hohen Intensität des Laserlichts nahe dem Laserkristall zu einer Degradation der Kristalloberfläche und damit zu einer Reduktion der Ausgangsleistung sowie zu Instabilitäten; diese Degradation ergibt sich auch trotz äußerst sorgfältiger Abdichtung des Behälters, sorgfältiger Wahl der Materialien und langer Wärmebehandlung der jeweiligen Bauteile, da ein allmähliches Ausgasen von restlichen chemischen Stoffen nicht vermieden werden kann. Diese Stoffe werden durch das intensive elektrische Feld nahe dem Kristall gecrackt, und die Partikel werden auf der Kristalloberfläche niedergeschlagen. Um diesen Effekt zu verhindern, schlägt die Erfindung auch vor, die Stärke des elektrischen Felds am Kristall zu verringern, und dies kann erfindungsgemäß durch Wahl von Laserkristallen mit einer größeren Dicke als üblich erzielt werden. Derartige Laserkristalle mit größerer Dicke führen dazu, den Strahldurchmesser an der Kristalloberfläche zu vergrößern und den Puls zu strecken. Auf diese Weise gelingt es auch, die Intensität des Feldes benachbart dem Kristall beträchtlich zu verringern, und zwar entsprechend dem inversen Produkt vom Strahldurchmesser mal Pulsdauer. Auch bei 50 fs-Pulsen erweist sich die Erhöhung der Kristalldicke als vorteilhaft. Insbesondere hat sich bei Versuchen gezeigt, dass Kristalldicken von mindestens 3 mm, insbesondere von 4 bis 7 mm, bevorzugt 4 bis 6 mm, besonders bevorzugt 5 bis 6 mm, zufolge der damit erzielten beträchtlichen Verringerung der Intensität an der Kristalloberfläche ausgezeichnete Ergebnisse hinsichtlich Langlebigkeit und Stabilität ergeben.

Die vorliegende Laserkristalleinrichtung kann bei den verschiedensten Laservorrichtungen eingesetzt werden, insbesondere bei modenverkoppelten Laseroszillatoren, wie vorzugsweise Kurzpuls-Laseroszillatoren, vor allem Femtosekunden-Laseroszillatoren.

Die Laservorrichtungen bzw. -oszillatoren oder auch -verstärker können dabei in an sich herkömmlicher Weise mit dispersiven Spiegeln aufgebaut sein, können aber z.B. auch Prismen zur Dispersionskontrolle aufweisen.

Die Erfindung wird nachfolgend beispielhaft anhand von bevorzugten Ausführungsformen, auf die sie jedoch nicht beschränkt sein soll, und unter Bezugnahme auf der Zeichnung noch weiter erläutert. Es zeigen:
die Fig. 1 bis 4 eine Laserkristalleinrichtung gemäß der Erfindung in Ansicht (Fig. 1), Draufsicht (Fig. 2), Seitenansicht von rechts (Fig. 3) und Seitenansicht von links (Fig. 4);
Fig. 5 einen Schnitt durch die Laserkristalleinrichtung gemäß den Fig. 1 bis 4, entsprechend der Linie V-V in Fig. 1;
Fig. 6 die Laserkristalleinrichtung gemäß den Fig. 1 bis 5 in einer schaubildlichen, auseinander gezogenen Darstellung ihrer Hauptbestandteile;
Fig. 7 in einem Diagramm den Laserstrahl-Radius (in mm) über der Resonatorposition, und zwar insbesondere der in mm gemessenen Position bzw. Strecke innerhalb des Gehäuses der Laserkristalleinrichtung;
Fig. 8 in einem Diagramm mehrere Kurven von zur Intensität des Laserstrahls proportionalen Werten (in beliebigen Einheiten) über der Pulsdauer, und zwar für verschiedene Kristalldicken; und die
Fig. 9A und 9B schematisch verschiedene Konfigurationen von Kurzpuls-Laserresonatoren, bei denen die erfindungsgemäße Kristalllasereinrichtung eingesetzt werden kann bzw. ist.

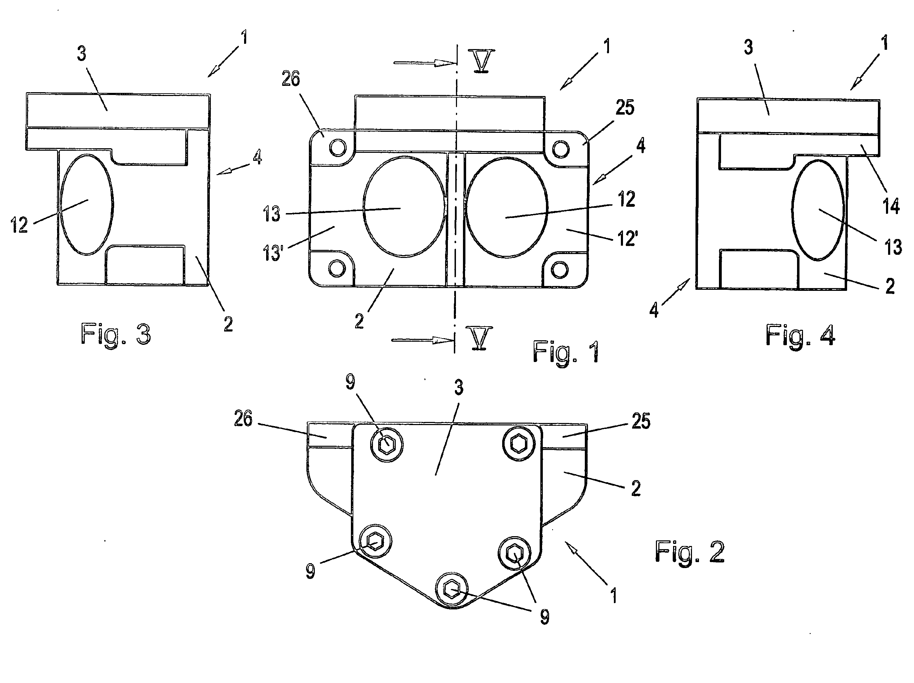

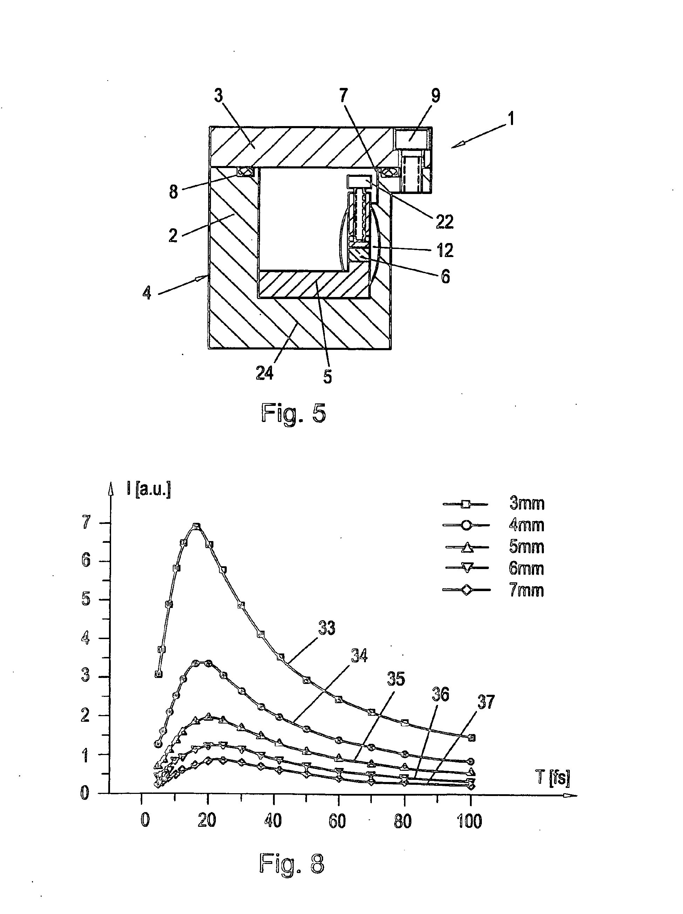

In den Fig. 1 bis 6 ist eine Laserkristalleinrichtung 1 gezeigt, die als wesentliche Komponenten ein Gehäuse 2 und einen Deckel 3, die zusammen einen Behälter 4 definieren, sowie eine im Inneren des Behälters 4 angebrachte Halterung 5 für einen Laserkristall 6 aufweist. Dieser Laserkristall 6 ist beispielsweise ein Ti:Saphir-Kristall, wie an sich bekannt. Das Gehäuse 2 und der Deckel 3 bestehen beispielsweise aus einer Aluminium-Magnesium-Legierung. An der Oberseite des Gehäuses 2 ist eine umlaufende Dichtungsnut 7 für einen z.B. Vakuum-tauglichen O-Ring 8 (Fig. 5) vorhanden, und dieser O-Ring 8 dichtet bei entsprechendem Festschrauben des Deckels 3 auf dem Gehäuse 2 mithilfe von beispielsweise fünf Zylinderkopfschrauben 9, die in Bohrungen 10 bzw. 11 des Deckels 3 bzw. Gehäuses 2 eingeschraubt werden, das Innere des Behälters 4 ab.

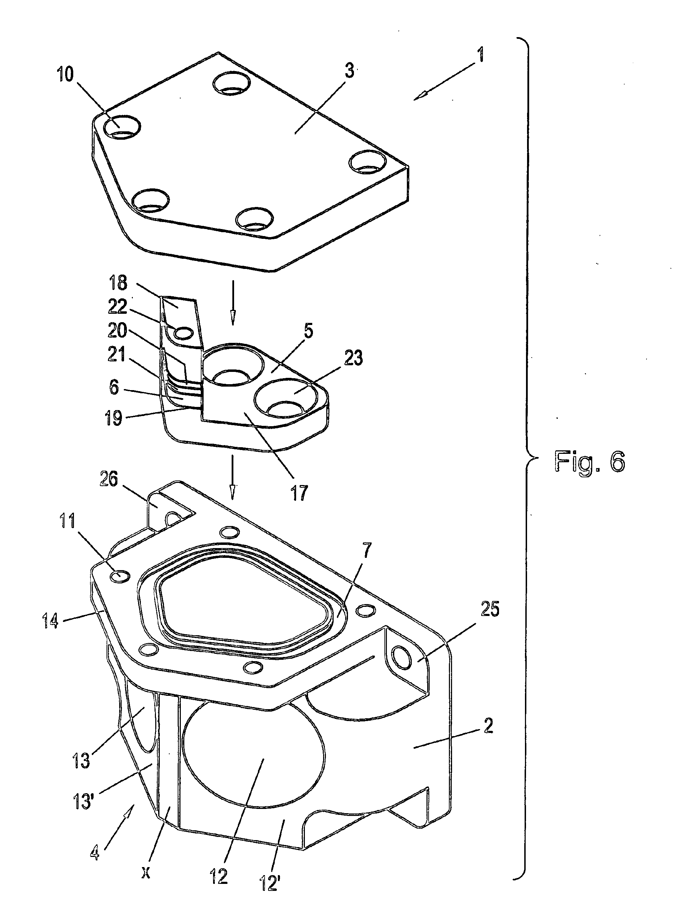

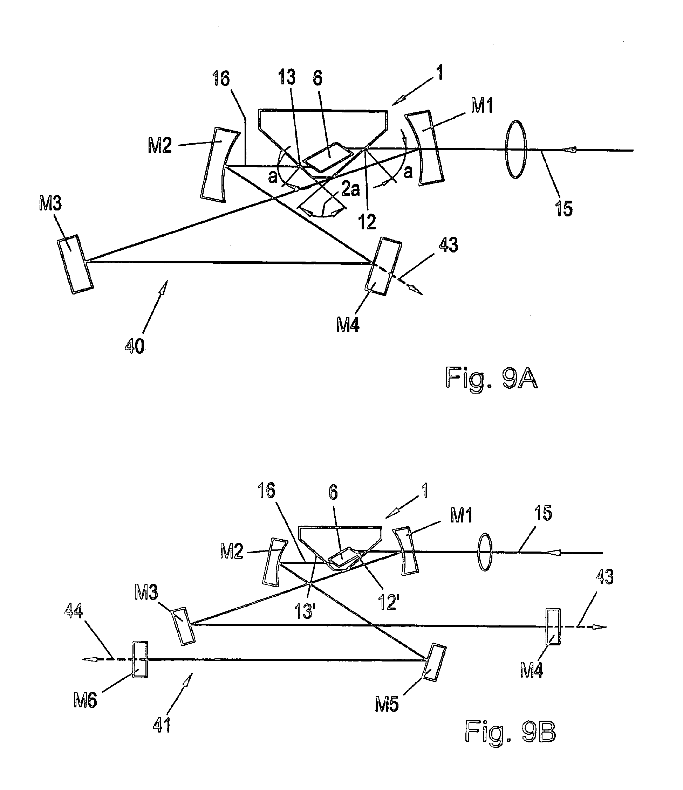

Der Behälter 4, genauer dessen Gehäuse 2, ist weiters mit zwei Brewster-Fenstern 12, 13 versehen, die unterhalb eines flanschartigen Befestigungsvorsprungs 14 des Gehäuses 2 für den Deckel 3 in Ausnehmungen in zwei zueinander winkelig angeordneten Seitenwänden 12', 13' des Gehäuses 2 angeordnet sind. Die Seitenwände 12', 13' schließen im gezeigten Ausführungsbeispiel über eine Abflachung oder Abrundung x, wie insbesondere aus Fig. 6 ersichtlich ist, aneinander an. Wie aus Fig. 9A und 9B ersichtlich ist, kann dann der reflektierte Laserstrahl knapp am Gehäuse der Laserkristalleinrichtung 1 vorbei gerichtet werden.

Die Brewster-Fenster 12, 13 werden mithilfe eines Vakuum-tauglichen Klebers in die dafür vorgesehenen Ausnehmungen in den Seitenwänden 12', 13' eingeklebt, wobei der Winkel der Brewster-Fenster 12, 13 für kleinstmögliche Verluste angepasst wird, vgl. in diesem Zusammenhang auch die schematischen Darstellungen in Fig. 9A und 9B, in denen schematisch der Laserkristall 6 sowie weiters ein Pumpstrahl 15 bzw. ein im Laserresonator mehrfach reflektierter Laserstrahl 16 mit der entsprechenden Winkellage des Laserkristalls 6 veranschaulicht sind.

Der Innenteil der Laserkristalleinrichtung 1, d.h. die Halterung 5, ist winkelförmig, mit einem Bodenteil 17 und einem davon hochragenden Ständerteil 18, ausgebildet; der letztere ist an seiner Vorderseite - in Entsprechung zur Innenseite des Behälters 4, am Übergang zwischen den beiden Seitenwänden 12', 13' - abgerundet, und er weist gemäß Fig. 5 zwei beispielsweise durch Drahterodieren hergestellte Ausschnitte 19, 20 auf, von denen der untere Ausschnitt 19 zur Aufnahme des Laserkristalls 6 dient, wogegen der darüber befindliche Ausschnitt 20 zur Anpress-Freistellung vorgesehen ist. Der dazwischen befindliche Materialteil 21 dient zum Festklemmen des Laserkristalls 6, wobei er mithilfe einer Klemmschraube 22, die von der Oberseite her in den Ständerteil 18 eingeschraubt wird, nach unten geringfügig ausgelenkt und gegen den Laserkristall 6 geklemmt wird.

Der Bodenteil 17 weist zwei Senkbohrungen 23 auf, um die Halterung 5 im Inneren des Behälters 4, am Boden 24 des Gehäuses 2 (s. Fig. 5), mit Hilfe von - nicht dargestellten - Senkkopfschrauben unter Zentrierung festschrauben zu können.

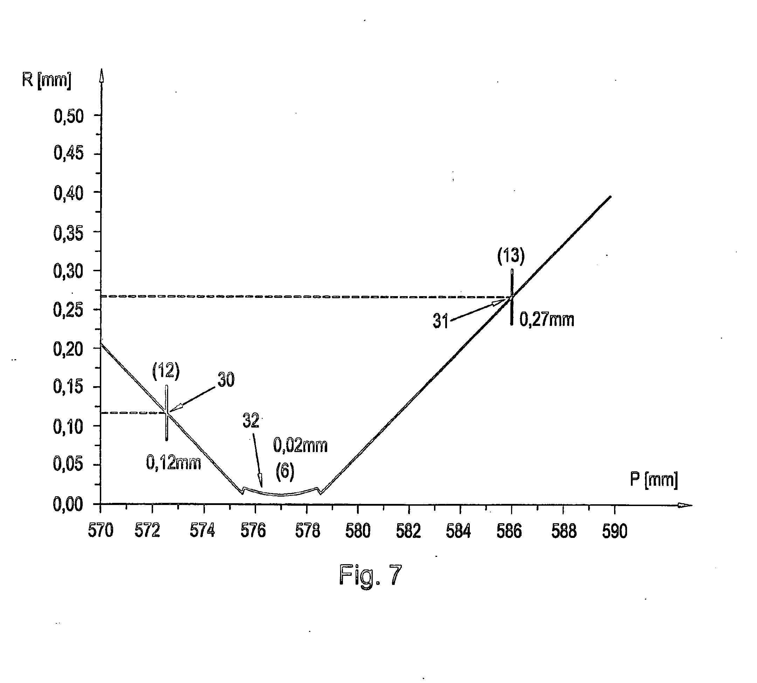

Das Gehäuse 2 hat weiters zwei seitliche Befestigungsflansche 25, 26, damit die Laserkristalleinrichtung 1, die somit eine dichte Kristallfassung für den Laserkristall 6 bildet, innerhalb der jeweiligen Lasereinrichtung montiert werden kann, und zwar in einer Position, in der ein Laserstrahl beispielsweise durch das eine Fenster 12 ein- und durch das andere Fenster 13 austreten kann, wie dies schematisch beispielhaft in Fig. 9A eingezeichnet ist. Das Gehäuse 2 kann beispielsweise durch Fräsen hergestellt werden; die Senkbohrungen 23 in der Halterung 5 ermöglichen eine Zentrierung beim Anbringen der Halterung 5 im Inneren des Gehäuses 2. Die allgemeine Querschnittsform des Gehäuses 2 ist wie aus der Zeichnung ersichtlich fünfeckig, wobei der Laserkristall 6 nach dem Zusammenbau im Bereich der mit einem stumpfen Winkel aneinander anschließenden Seitenwände 12', 13' des Gehäuses 2, die auch die Fenster 12, 13 enthalten, zu liegen kommt. Dabei ist jedoch keine symmetrische Anordnung gegeben, vielmehr ist die eine Ein- bzw. Austrittsfläche des Laserkristalls näher am benachbarten Fenster, z.B. 12, vorgesehen als die andere Ein- bzw. Austrittsfläche. Dies ergibt sich außer aus Fig. 9A und 9B beispielsweise auch aus Fig. 7, in der schematisch ein Diagramm gezeigt ist, das den Verlauf des Radius R des Laserstrahls (in mm) über der Längenposition P im Laserresonator (in mm), insbesondere innerhalb der Laserkristalleinrichtung 1 bzw. des Behälters 4, veranschaulicht. Dabei sind bei 30 und 31 die Positionen der Fenster 12, 13 am Gehäuse 2 veranschaulicht; am kleinsten ist der Radius im Bereich 32 des Laserkristalls 6, an der Kristallfläche, wo er 0,02 mm beträgt. Auf der x-Achse lässt sich dabei ablesen, dass die eine Fensterposition 30 in einem Abstand von ca. 3 mm von der benachbarten Stirnseite des Laserkristalls 6 gelegen ist, wogegen die andere Fensterposition 31 einen Abstand von annähernd 8 mm von der zugewandten Laserkristall-Stirnseite hat.

Beim Zusammenbau der dichten Laserkristalleinrichtung 1 werden die Fenster 12, 13 in den Wandausnehmungen des Gehäuses 2 eingeklebt, und die Halterung 5 wird im Gehäuse 2 angeschraubt; sodann wird der O-Ring 8 in die Nut 7 an der Oberseite des Gehäuses 2 eingelegt, und der Deckel 3 wird auf das Gehäuse 2 aufgelegt und mithilfe der Zylinderkopfschrauben 9 fixiert.

Danach kann das Gehäuse 2 evakuiert und sodann mit einem Gas mit hohem Ionisationspotential, insbesondere einem Edelgas, gefüllt werden. Es hat sich jedoch gezeigt, dass eine Reinluft-Füllung des Behälters 4 durchaus ausreichend ist, wenn die Abstände des Laserkristalls 6 von den Fenstern 12, 13 wie gezeigt ausreichend groß sind, um einen entsprechend großen Strahldurchmesser an den Fenstern 12, 13 sicherzustellen, s. Fig. 7, sodass ein Niederschlagen von Partikeln oder dgl. an den Fenstern 12, 13 aufgrund der so im Bereich der Fenster 12, 13 gegebenen verhältnismäßig niedrigen Intensität zu keiner Degradation der Fenster 12, 13 führt.

Was den Laserkristall 6 betrifft, so kann dieser eine vergleichsweise große Dicke aufweisen, vorzugsweise mehr als 3 mm, insbesondere mehr als 4 mm, abhängig von der Pulsdauer T, vgl. auch Fig. 8. In dieser Fig. 8 sind fünf Kurven 33 bis 37 (für fünf verschiedene Kristalldicken) für einen zur Intensität des Laserstrahls am Laserkristall 6 proportionalen Intensitätswert I in beliebigen Einheiten (a.u. - arbitrary units) über der Pulsdauer T (in fs) veranschaulicht. Dabei ist ersichtlich, dass bei einer sehr kurzen Pulsdauer T von ungefähr 20 fs bei einer Laserdicke von 3 mm (Kurve 33) die Intensität vergleichsweise noch groß ist, jedoch mit zunehmender Pulsdauer T abnimmt. Demgegenüber ist bei etwas größeren Kristalldicken, etwa bei 4 mm (Kurve 34) oder 5 mm (Kurve 35), insbesondere 6 mm (Kurve 36) oder 7 mm (Kurve 37), zunehmend eine kleinere Intensität erkennbar, insbesondere auch bereits bei einer Pulsdauer T von 20 fs, bei der sie nur mehr einen Wert in der Größenordnung der Hälfte der Intensität bei einer Kristalldicke von 3 mm (Kurve 33) hat. Durch diese Reduktion der Intensität des Laserstrahls an der Kristalloberfläche gelingt es ebenfalls, die schädlichen Wirkungen von etwaigen Partikeln oder dgl., die sich auf der Kristalloberfläche niedergeschlagen haben, zu verhindern.

In den Fig. 9A und 9B sind schließlich noch schematisch verschiedene Laserresonator-Konfigurationen veranschaulicht, die zur Realisierung von modenverkoppelten Kurzpuls-Lasern 40, 41, vorgesehen sind. Dabei wird jeweils mithilfe eines Pumpstrahls 15, der von einem herkömmlichen, nicht gezeigten Pumplaser herrührt, in an sich bekannter Weise ein gepulster Laserstrahl in einem mit Spiegeln M1, M2, M3, M4 sowie gegebenenfalls weiters M5 und M6 gebildeten Oszillator erzeugt; der Spiegel M1 ist für den Pumpstrahl 15 durchlässig, nicht jedoch für den Laserstrahl 16, der an seiner beispielsweise konkaven Spiegelfläche reflektiert wird. Der Spiegel M4 ist beispielsweise als teilweise durchlässiger Spiegel ausgebildet, um so einen Auskoppelspiegel zu bilden, an dem ein Laserstrahl-Anteil 43 ausgekoppelt wird. Ähnliches trifft gegebenenfalls auf den Spiegel M6 zu, an dem ein Laserstrahl-Anteil 44 ausgekoppelt werden kann, falls ein derartiges doppelseitiges Auskoppeln gewünscht wird, vgl. Fig. 9B. Da derartige Kurzpuls-Lasereinrichtungen an sich hinlänglich bekannt sind, kann sich eine weitere Erläuterung hiervon erübrigen. Aus den Fig. 9A und 9B ist weiters die Anordnung der Fenster 12, 13 bzw. der Seitenwände 12', 13' zur jeweiligen Laserstrahl-Richtung unter dem (von der Wellenlänge der Laserstrahlung abhängigen) Brewsterwinkel a erkennbar, wobei sich dann auch ergibt, dass sich die beiden Seitenwände 12', 13' unter dem doppelten Brewsterwinkel 2a relativ zueinander erstrecken müssen. (Die Laserstrahlung ändert beim Durchlauf der vorliegenden Laserkristalleinrichtung 1 weder die Wellenlänge noch die Polarisation.)

## Patentansprüche

1. Laserkristalleinrichtung (1) für Kurzpulslaser, mit einem Behälter (4), dessen Inneres gegenüber der Umgebung abgedichtet ist, und der an Seitenwänden (12', 13') angebrachte Fenster (12, 13) für den Durchtritt von Laserstrahlung (16) enthält, die im Betrieb durch einen Laserkristall (6) hindurchgeht, wobei die Fenster (12, 13) um den Brewsterwinkel zum Strahlgang der Laserstrahlung (16) verkippt angeordnet sind, und sich In einem, bezogen auf die Laserstrahleigenschaften, genügend großen Abstand von der Stelle des Laserkristalls (6) befinden, bei dem der Strahlquerschnitt an den Fenstern (12, 13) ausreichend groß ist, um eine im Vergleich zur Spitzenintensität der Laserstrahlung (16) am Laserkristall (6) geringere Spitzenintensität an den Fenstern (12, 13), zur Vermeidung von Degenerierungsprozessen an den Fenstern (12, 13), sicherzustellen, und wobei im Inneren des Behälters (4) eine Halterung (5) für den Laserkristall (6) angebracht ist, **dadurch gekennzeichnet, dass** die Fenster (12, 13) in zwei zueinander winkelig angeordneten Seitenwänden (12', 13') des Behälters (4) um den doppelten Brewsterwinkel zueinander verkippt angeordnet sind, und dass der Behälter (4) eine technisch reine Atmosphäre enthält.

2. Laserkristalleinrichtung nach Anspruch 1, **dadurch gekennzeichnet, dass** die Seitenwände (12', 13'), in denen die Fenster (12, 13) angeordnet sind, aneinander anschließen.

3. Laserkristalleinrichtung nach Anspruch 2, **dadurch gekennzeichnet, dass** am Übergang von einer Seitenwand zur anderen eine Abflachung oder Abrundung vorgesehen ist.

4. Laserkristalleinrichtung nach einem der Ansprüche 1 bis 3, **dadurch gekennzeichnet, dass** der Behälter (4) ein Gas mit hohem Ionisationspotential enthält.

5. Laserkristalleinrichtung nach einem der Ansprüche 1 bis 4, **dadurch gekennzeichnet, dass** der Behälter (4) eine Edelgas-Atmosphäre enthält.

6. Laserkristalleinrichtung nach einem der Ansprüche 1 bis 3, **dadurch gekennzeichnet, dass** der Behälter (4) reine Luft enthält.

7. Laserkristalleinrichtung nach einem der Ansprüche 1 bis 6, **dadurch gekennzeichnet, dass** die Fenster (12, 13) in einem Abstand von einigen mm, z.B. mindestens 3 mm, von der Stelle des Laserkristalls (6) vorliegen.

8. Laserkristalleinrichtung nach einem der Ansprüche 1 bis 7, **dadurch gekennzeichnet, dass** in der Halterung (5) ein Laserkristall (6) mit einer Dicke von mindestens ca. 3 mm, vorzugsweise zwischen 4 und 7 mm, angebracht ist.

9. Modenverkoppelter Kurzpuls-Laseroszillator (40, 41) mit einer Laserkristalleinrichtung (1), **dadurch gekennzeichnet, dass** die Laserkristalleinrichtung (1) gemäß einem der Ansprüche 1 bis 8 ausgebildet ist.

10. Kurzpuls-Laseroszillator nach Anspruch 9, **gekennzeichnet durch** eine Ausbildung als Femtosekunden-Laseroszillator.

## Claims

1. A laser crystal device (1) for short pulse lasers, said device comprising a container (4) whose interior is sealed in relation to the environment, and which includes windows (12, 13) which are attached to side walls (12', 13') for the passage of laser radiation (16) which passes through a laser crystal (6) in operation, the windows (12, 13) being situated tilted by the Brewster's angle to the beam path of the laser radiation (16), and being located at a sufficiently large distance, with respect to the laser beam properties, from the position of the laser crystal (6) at which the beam cross-section of the windows (12, 13) is sufficiently large in order to ensure a lower peak intensity at the windows (12, 13) in comparison to the peak intensity of the laser radiation (16) at the laser crystal (6), to prevent degeneration processes at the windows (12, 13), and a mounting (5) for the laser crystal (6) being attached in the interior of the container (4), **characterized in that** the windows (12, 13) are situated tilted relative to one another by twice the Brewster's angle in two side walls (12', 13') of the container (4), which are arranged at an angle to one another, and **in that** the container (4) contains a technically pure atmosphere.

2. The laser crystal device according to Claim 1, **characterized in that** the side walls (12', 13'), in which the windows (12, 13) are situated, adjoin one another.

3. The laser crystal device according to Claim 2, **characterized in that** a flattened or rounded area is provided at the transition area from one side wall to the other.

4. The laser crystal device according to any one of Claims 1 to 3, **characterized in that** the container (4) contains a gas having high ionization potential.

5. The laser crystal device according to any one of Claims 1 to 4, **characterized in that** the container (4) contains a noble gas atmosphere.

6. The laser crystal device according to one of Claims 1 to 3, **characterized in that** the container (4) contains pure air.

7. The laser crystal device according to any one of Claims 1 to 6, **characterized in that** the windows (12, 13) are provided at a distance of several millimeters, for example, at least 3 mm, from the position of the laser crystal (6).

8. The laser crystal device according to any one of Claims 1 to 7, **characterized in that** a laser crystal (6) having a thickness of at least approximately 3 mm, preferably between 4 and 7 mm, is attached in the mounting (5).

9. A mode-locked short pulse laser oscillator (40, 41) comprising a laser crystal device (1), **characterized in that** the laser crystal device (1) is designed according to any one of Claims 1 to 8.

10. The short pulse laser oscillator according to Claim 9, **characterized by** a design as a femtosecond laser oscillator.

## Revendications

1. Dispositif à cristal laser (1) pour laser à impulsions courtes, avec un récipient (4), dont l'intérieur est étanchéifié par rapport à l'environnement et qui contient des fenêtres (12, 13) montées sur des parois latérales (12', 13') pour le passage d'un rayonnement laser (16), qui en service traverse un cristal laser (6), dans lequel les fenêtres (12, 13) sont agencées de manière penchée sous l'angle de Brewster par rapport au trajet du rayonnement laser (16) et se trouvent à une distance suffisamment grande de l'emplacement du cristal laser (6) pour ce qui est des propriétés du rayon laser, dans lequel cristal laser la section transversale du rayon au niveau des fenêtres (12, 13) est suffisamment grande pour assurer, sur le cristal laser (6), une intensité maximale au niveau des fenêtres (12, 13) plus faible que l'intensité maximale du rayonnement laser (16), pour éviter des processus de dégénération au niveau des fenêtres (12, 13), et dans lequel dispositif une fixation (5) pour le cristal laser (6) est montée à l'intérieur du récipient (4), **caractérisé en ce que** les fenêtres (12, 13) sont agencées de manière penchée l'une par rapport à l'autre selon le double de l'angle de Brewster, dans deux parois latérales (12', 13') du récipient (4) agencées de manière mutuellement angulaire, et **en ce que** le récipient (4) contient une atmosphère techniquement pure.

2. Dispositif à cristal laser selon la revendication 1, **caractérisé en ce que** les parois latérales (12', 13'), dans lesquelles les fenêtres (12, 13) sont agencées, sont contiguës l'une à l'autre.

3. Dispositif à cristal laser selon la revendication 2, **caractérisé en ce qu'**il est prévu un aplatissement ou un arrondissement au niveau de la transition d'une paroi latérale à l'autre.

4. Dispositif à cristal laser selon l'une quelconque des revendications 1 à 3, **caractérisé en ce que** le récipient (4) contient un gaz ayant un potentiel d'ionisation élevé.

5. Dispositif à cristal laser selon l'une quelconque des revendications 1 à 4, **caractérisé en ce que** le récipient (4) contient une atmosphère de gaz rare.

6. Dispositif à cristal laser selon l'une quelconque des revendications 1 à 3, **caractérisé en ce que** le récipient (4) contient de l'air pur.

7. Dispositif à cristal laser selon l'une quelconque des revendications 1 à 6, **caractérisé en ce que** les fenêtres (12, 13) se situent à une distance de quelques mm, par exemple d'au moins 3 mm, de l'emplacement du cristal laser (6).

8. Dispositif à cristal laser selon l'une quelconque des revendications 1 à 7, **caractérisé en ce qu'**un cristal laser (6) ayant une épaisseur d'au moins environ 3 mm, de préférence entre 4 et 7 mm, est monté dans la fixation (5).

9. Oscillateur laser à impulsions courtes (40, 41) à couplage modal avec un dispositif à cristal laser (1), **caractérisé en ce que** le dispositif à cristal laser (1) est conçu selon l'une quelconque des revendications 1 à 8.

10. Oscillateur à laser à impulsions courtes selon la revendication 9, **caractérisé par** une conception sous la forme d'un oscillateur laser femtoseconde.
